# EUROPEAN PATENT SPECIFICATION

(11) **EP 1 475 316 B1**
(45) Date of publication and mention of the grant of the patent: **30.11.2011**
(21) Application number: 04076408.6
(22) Date of filing: 31.05.1999
(51) Int. Cl.: B65D 83/14

(54) **Device for maintaining a constant predetermined pressure in a container**
Vorrichtung zum Einhalten eines vorgebbaren Druckwertes in einem Behälter
Dispositif pour maintenir une pression constante prédéterminée dans un récipient

(30) Priority: 29.05.1998 NL 1009292; 02.06.1998 EP 98201819
(43) Date of publication of application: 10.11.2004
(62) Divisional of application: 99925470.9
(73) Proprietor: I.P.S. Research and Development B.V., 5251 CC Vlijmen (NL)
(72) Inventor: Van't Hoff, Jaap Herman, 3263 BK Oud-Beijerland (NL)
(74) Representative: Spierenburg, Pieter

(56) References cited:
- EP-A- 0 349 053
- EP-A- 0 446 973
- EP-A- 0 478 858
- WO-A-90/15377
- WO-A-93/22222
- FR-A- 2 690 142
- US-A- 4 456 155

## Description

This is a divisional application of European patent application no. 99 925 470.9.

This invention relates to a pressure control device for maintaining a constant predetermined pressure in a container which is arranged for dispensing a fluid contained in the container from the container at that pressure according to claim 1.

Such a device is known, for instance, from European patent EP 0 478 858 B1. The device according to the European patent comprises a vessel in which a cylindrical member is accommodated. The cylindrical member is closed off at a first end and comprises a second end linking up with an opening in the vessel. Accommodated in the cylindrical member is a likewise cylindrical plunger. Together with the cylindrical member, this plunger forms the second chamber. The first chamber is formed by the vessel and the cylindrical member. In fact, this means that the second chamber is disposed inside the first chamber, i.e. is disposed inside the vessel. Depending on the position of the plunger in the cylindrical member, an opening provided in a sidewall of the cylindrical member can be put into fluid communication with the above-mentioned opening of the vessel. All this means that, depending on the position of the plunger relative to the first chamber, the first chamber can be placed into fluid communication with a space located outside the vessel. In use, this means that a fluid connection between the first chamber and the container can be released and closed depending on the position of the plunger in the cylindrical member.

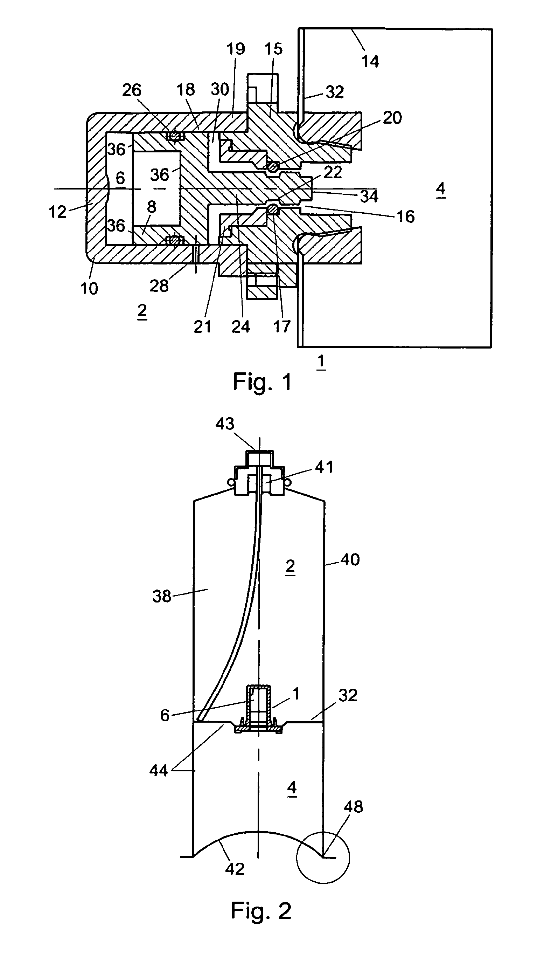

The device as described with respect to Figures 2A to 2C in above mentioned document is not enabling the skilled person to practice the technical teaching: a cylinder 36 is disposed in the vessel 32, wherein the upper end is secured in a notch formed in the inner wall of a flange 32a. It is completely unclear how the cylinder 36 can be introduced through an opening at flange 32a which has a smaller diameter than the outer diameter of the cylinder 36.

Moreover, it is further described in col. 3, 5^{th} paragraph that the chamber 38 and 46 are charged to a predetermined pressure with a quantity of inert gas such as air. This charging could be performed through suitable openings (which are not shown) formed through the walls of the vessel 32 and the cylinder 36. However, since the cylinder 36 is located within the vessel 32 it is not feasible to charge the cylinder 36 through an opening through its wall. The alternative method of charging as described further is also not feasible as pressure in the chamber 46 would be much higher than the pressure in the chamber 38, whereas for the functioning of the device it should be precisely reversed.

In fact, the device as patented in above mentioned European patent has never been realised in practice, which would also not possible because of the reasons mentioned above.

In WO-A-93/22222, upon which the preamble of claim 1 is based, another pressure control device is described, which is from the same inventor as in the document mentioned above. The device or pressure generator 134 as depicted in Figure 8 of this document is encompassed in a container 10. The pressure generator 134 is formed by a cylindrical vessel 136 having closed lower and upper ends. A horizontal partition 138 is integrally secured within the vessel 136 and defines a high pressure chamber 140 below the partition 138. An opening 138a is provided through the partition 138 coaxially with the vessel 136 and an annular groove is formed in the opening 138a for receiving an O-ring 142. A piston rod 144 attached to a plunger 146 extends through the opening 138a. The rod 144 has a tapered lower end 144a and a notch or groove 144 formed at one side of the rod 144 above the partition 138. An annular groove is provided in the outer circumference of the plunger 146 for receiving an O-ring 148. A prepressure chamber 150 is defined between the plunger 146 and the upper end of the vessel 136. A chamber 152 is defined between the plunger 146 and the partition 138, is pressurized to urge the plunger 146 upwardly.

Pressurization of the chambers 140 and 150 as follows. the plunger 146 is lowered below the opening 136a in the vessel 136. Then, pressurized gas is introduced from the opening 136a to the chamber 150. The plunger 146 is then raised such that the O-ring 148 is above the opening 136a to seal the gas in the chamber 150 (see page 18, lines 12-16). It is absolutely incomprehensible how a plunger in a closed vessel can be moved in the manner as described above. Then it is described that to charge the chamber 140, pressurized gas is introduced to the chamber 152 via the opening 136a to urge the plunger 146 upwardly. The pressure within the chamber 152 is increased until the plunger 146 is raised to a height such that the tapered end 144a of the rod 144 is disposed within the opening 138a to allow gas to pass through the opening 138a and into the chamber 140. The introduction of gas is continued until the chamber 140 is pressurized to the predetermined level. When the introduction of the gas through the opening 136a of the vessel 136 is terminated, the plunger 146 is urged downwardly by the pressure in the chamber 150 to the position shown in Fig. 8 (see page 18. lines 17-31).

However, Figure 8 illustrates a vessel with only one opening, i.e. opening 136a. It would have been apparent to a person skilled in the art that, after the pressurized gas is introduced into chamber 150 through opening 136a, plunger 146 could not be raised to the position where O-ring 148 is above opening 136a in the vessel.

After charging the pressure control device is placed in a dispensing container 10. In use the plunger 146 remains in the position shown in Fig. 8 until the container 10 is used by manually pressing the push button 2, whereby the pressure in the headspace 14 of the container propels the product via openings in the push button. This causes the pressure in the container and accordingly in the chamber 152 to decrease, so that the pressure in the chamber 150 is larger and the plunger 146 is moved downwardly until the notch 144b extends into the opening 138a of the partition 138. Thus, high pressurized gas from the chamber 140 will pass through the opening 138a and through the opening 136a into the container 10. Therefore, the pressure in the container 10 increases until the pressure is higher than the pressure in the chamber 150 above the plunger 146 and the plunger 146 is moved back to the position shown in Fig. 8. (see page 19, lines 6-31).

It is further incomprehensible how the plunger 146 will be moved further upwardly while the opening 138a is already closed. In fact, also this device has never been realized in practice.

The object of the invention is to provide a solution to the disadvantages outlined hereinabove.

This object is reached by a pressure control device with the features of claim 1.

In accordance with the present invention, the first chamber is provided by vessel and the second chamber by a cylinder, which different entities are connecting by a connecting member through the first opening in the wall of the vessel. Thus, charging of the pressure control device with exactly defined predetermined pressures is now feasible.

Because, further, the pressure difference between the second chamber and the container will be slight and in general the pressures involved will even be equal to each other, seals in the form of O-rings optionally used between the second chamber and the closing member will not be exposed to great pressure differences. The deformation and wear referred to will therefore not occur.

According to the invention, a sidewall of the first chamber is provided with a first opening through which the fluid connection extends, and a sidewall of the second chamber is provided with a second opening, the closing member extending from the first chamber via the first and second opening to the second chamber, a first subsurface of the closing member being situated in the first chamber and a second subsurface of the closing member being situated in the second chamber, the form of the first and second subsurface being such that a certain gas pressure which is exerted on the first subsurface results in a force in a direction of movement of the closing member that is smaller than the force in the direction of movement of the closing member that results when this gas pressure is exerted on the second subsurface, while the first opening can be released or closed by the closing member depending on the position of the closing member relative to the second chamber.

According to a particular embodiment, the volume of the second chamber is dependent on the position of the closing member relative to the second chamber. In that case, the prevailing pressure of the second chamber alone can be used for determining the predetermined pressure.

According to a highly advanced embodiment, furthermore, the device is arranged to be accommodated in a cylindrical container, the first chamber being designed as a plunger which is arranged to be accommodated, in use, in the container so as to be movable in the axial direction of the container, the first chamber dividing the container into an upper and a lower part, and the fluid connection terminating in the lower part of the container, while the upper part of the container is filled with the fluid to be dispensed, and in use, when the pressure in the upper part of the container decreases below the predetermined pressure, the pressure in the lower part of the container will likewise decrease because the first chamber designed as a plunger will move such that the volume of the upper part of the container will decrease while the volume of the lower part of the container will increase, and also the fluid connection between the first chamber and the lower part of the container is released, so that gas flows from the first chamber to the lower part of the container and the pressure in the lower part of the container as well as the pressure in the upper part of the container will increase again, while the chamber designed as a plunger will move further upwards until the fluid connection is closed again by the closing member as a result of the increased pressure in the lower part of the container.

The invention also relates to a container which is provided with a pressure control device as described hereinabove.

The invention will presently be further explained with reference to the drawing, in which:
Fig. 1 shows a first embodiment of a pressure control device according to the invention;
Fig. 2 shows a first possible use of the pressure control device according to Fig. 1 in a container;
Fig. 3 shows the second possible use of the pressure control device according to Fig. 1 in a container;
Fig. 4 shows a third possible use of the pressure control device according to Fig. 1 in a container;
Fig. 5 shows a fourth possible use of the pressure control device according to Fig. 1 in a container;
Fig. 6 shows a second embodiment of a pressure control device according to the invention which is used in a container; and
Fig. 7 shows a third embodiment of a pressure control device according to the invention which is used in a container.

In Fig. 1, reference numeral 1 designates a first embodiment of a pressure control device according to the invention. The pressure control device 1 is arranged for maintaining a constant predetermined pressure in a container. The container can consist, for instance, of an aerosol can which is arranged to dispense a fluid with which the container is filled, from the container at the pressure referred to. An inner space 2 of the container in which the product is contained and which inner space is under pressure, is designated by reference numeral 2.

The pressure control device comprises a first chamber 4 and a second chamber 6. The second chamber 6 is located outside the first chamber. In other words, the second chamber 6 is located outside a space enclosed by the first chamber. The device further comprises a closing member 8, movable relative to the second chamber 6, which forms a part of a valve to be further discussed hereinafter. The second chamber 6 consists of a cylinder 10 which is closed at a first end 12. The cylinder 10 extends at least substantially in the inner space 2 of the container. In this example, the first chamber consists of a vessel 14 which is provided with a first opening 16. In this example, the closing member 8 consists of a plunger 8 movable in the axial direction of the cylinder 10. The plunger 8 extends into the first opening 16. Further, the plunger extends into a second opening 18 of the second chamber 6. In fact, the second opening 18 is formed by the open end 19 of the cylinder 10. A connecting member 15 is associated with the second axial end 19 of the cylinder 10 and is connecting the cylinder 10 to the vessel 14 through the first opening 16. The first opening 16 is provided with a sealing ring 20. The sealing ring 20 is fixed to the connecting member 15 in a recess 17 between the connecting member 15 and a locking ring 21. The sealing ring 20 further extends in a circumferential recess 22 of a stem 24 of the plunger 8. Further, on its outer side, the plunger 8 is provided with a sealing ring 26 which constitutes a gas seal between an outer side of the plunger 8 on one side and an inner side of cylinder 10 on the other. The plunger 8 can be reciprocated relative to the second chamber 6 in axial direction between extreme positions which are defined by the width of the recess 22. When in the drawing the plunger has moved to its extreme left position, the plunger 8 will close the first opening 16. Further, in a sidewall of the cylinder 10 an opening 28 is provided at a position located outside the second chamber 6.

In use, the first chamber 4 will be filled with a gas under a relatively high pressure. The inner space 2 of the container as well as the second chamber are each also filled with a gas. The pressure in the container and in the second chamber 6, however, is lower than the pressure in the first chamber 4.

The operation of the device is as follows. The starting-point is that the pressure of the second chamber is approximately equal to the pressure in a space 30 enclosed by cylinder 10, which space 30, however, lies outside the second chamber. The plunger 8 is disposed in its extreme left position, so that the opening 16 is closed. In this example, the sum of the forces exerted on the plunger is substantially determined by the pressure in the second chamber and the pressure in the space 30. The pressure in the first chamber 4 makes only a slight contribution in that the portion of the plunger disposed in the first chamber 4 has a relatively small surface area.

When the pressure in the container starts to decrease as a result of a user drawing fluid from the container, this has as a consequence that the pressure in the inner space 2 of the container will decrease. Via the opening 28, the pressure in the space 30 will then likewise decrease. The pressure in the second chamber 6 will then be higher than the pressure in the space 30. The result is that the plunger in Fig. 1 will move to the right under the influence of the prevailing pressure in the second chamber 6 and the prevailing pressure in the inner space 2 of the container. As a result, the opening 16 is released. When the opening 16 is released, this entails the release of a fluid connection between the first chamber 4 and the inner space 2 of the container. This fluid connection extends through the opening 16 and through the opening 28. Because the pressure in the first chamber 4 is higher than the pressure in the inner space 2 of the container, gas will start to flow from the first chamber 4 to the inner space 2 of the container. As a result, the pressure in the inner space 2 of the container will start to rise again. At a certain moment, the pressure in the inner space 2, and hence also the pressure in the space 30, has risen to the extent where the plunger 8 will be moved to the left again and eventually close the opening 16 again. In this way, again a state of equilibrium is achieved, with the pressure in the inner space 2 of the container back at the original level. In this example, the volume of the first chamber is much greater than the volume of the second chamber. As a result, on the one hand sufficient gas can be received in the first chamber 4 to restore the pressure in the container a large number of times. On the other hand, the small second chamber 6 is advantageous in that it enables a compact design of the device. In this example, the volume of the second chamber 6 is dependent on the position of the closing member relative to the second chamber. Also, in this example, a sidewall 32 of the first chamber is provided with the opening 16 through which the fluid connection extends. Further, a sidewall of the second chamber is provided with the opening 18. In fact, the opening 18 is formed by the open end of the cylinder 10. Further, the closing member extends from the first chamber 4 via the openings 16 and 18 to the second chamber 6. A first subsurface 34 of the closing member is situated in the first chamber, while a second subsurface 36 of the closing member is situated in the second chamber 6. Because the surface of the first subsurface 34 is much smaller than the surface of the second subsurface 36, the force which is exerted on the closing member as a result of the pressure of the gas will be determined to a relatively slight extent by the pressure in the first chamber 4. The prevailing pressure in the second chamber 6, as well as the pressure in the inner space 30, yield comparatively much greater forces that are exerted on the closing member 8. Accordingly, the form of the first and second subsurface is such that a certain gas pressure exerted on the first subsurface results in a force in a direction of movement of the closing member that is smaller than the force in the direction of movement of the closing member which results when this gas pressure is exerted on the second subsurface. The state of equilibrium in which the fluid connection, i.e. the opening 16, is closed is therefore substantially determined by the pressure prevailing in the second chamber 6 and is at least substantially independent of the pressure prevailing in the first chamber 4.

Fig. 2 shows a possible use of the device according to Fig. 1 in a container 38, designed as an aerosol can. Parts corresponding to Fig. 1 are provided with the same reference numerals. The container consists of a vessel 40 with a bottom 42. At its top, the vessel 40 is provided with a valve 41, known per se, which is provided with a push button 43. Upon energization of the push button 43, the fluid contained in the inner space of the container squirts out. The first chamber consists of a cup-shaped holder 44 which is placed upside down in the container 40. The cup-shaped holder 44 has its longitudinal edge 48 joined together with the bottom 42 and the upright sidewall of the vessel 40. In an opening of the wall 32 of the first chamber 44, the remainder of the pressure control device 1 is arranged. The operation of the assembly corresponds entirely to that discussed in relation to Fig. 1.

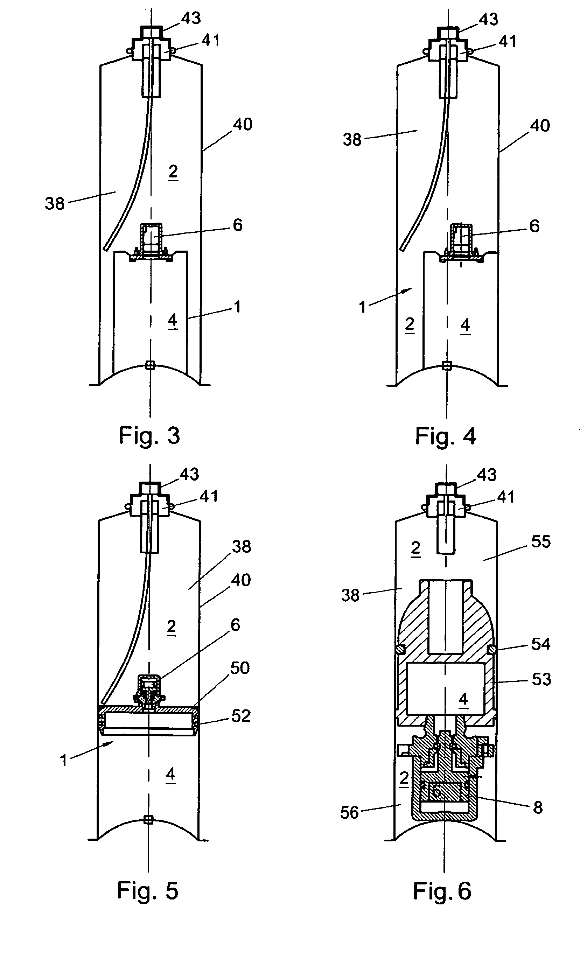

Fig. 3 shows a container which is provided with a pressure control device according to Fig. 1. However, the diameter of the first chamber 4 is smaller than that discussed in relation to Fig. 2. The operation, however, is wholly identical.

Fig. 4 also shows a container comprising a device according to Fig. 1. Again, the diameter of the first chamber 4 is smaller than the diameter of the vessel 40. In this case, however, the first chamber 4 is not accommodated concentrically within the vessel 40. However, the operation is again entirely analogous to that discussed in relation to Fig. 1.

The vessel 40 of the container according to Fig. 5 is provided with a disc 50 slightly below the middle of the height of the vessel. The disc 50 is gas-tightly connected with the inside of the vessel 40 through a sealing ring 52. The disc 50 thus divides the vessel 40 into two parts. The upper part constitutes the inner space 2 of the container, in which the fluid to be dispensed is stored, while the lower part of the vessel 40 in fact constitutes the first chamber 4. Accordingly, the disc 50 constitutes a partition between the inner space 2 of the container and the first chamber 4 and so corresponds to the wall indicated in Fig. 1 by reference numeral 32. The remainder of the pressure control device 1 corresponds entirely to the pressure control device 1 as discussed in relation to Fig. 1.

Fig. 6, shows a second possible embodiment of a pressure control device according to the invention used in a container. Here, parts corresponding to the preceding figures are again provided with the same reference numerals.

The pressure control device shown in Fig. 6 substantially corresponds to the device according to Fig. 1. The device 1 is arranged to be received in a cylindrical container 38. The first chamber, on the outer side thereof, is designed as a plunger which is arranged to be received, in use, in the container so as to be movable in the axial direction of the container. The plunger 53 formed by the first chamber 4 is provided, on the outer side thereof, with a sealing ring 54. The first chamber 4 divides the inner space 2 of the container into an upper part 55 and a lower part 56. The fluid connection referred to above terminates in the lower part 56. In this example, the upper part 55 of the container 38 is filled with the fluid to be dispensed.

In a state of equilibrium, the pressure in the upper part 55 will be approximately equal to the pressure in the lower part 56. When, on the other hand, the pressure in the upper part 55 starts to decrease because fluid is being drawn from the container, the plunger 53 and hence the entire device 1 will move upwards under the influence of the higher pressure in the lower part 56. As a result, the pressure in the lower part 56 will decrease, while the pressure in the upper part 55 will rise. Eventually, the pressure in the upper part 55 will be equal again to the pressure in the lower part 56. However, because the pressure in the lower part 56 has decreased, the closing member 8 of the device 1 will open the fluid connection between the first chamber 4 and the lower part 56. The result is that gas flows from the first chamber 4 to the lower part 56 of the container. As a result, the pressure in the lower part 56 will rise again until eventually the pressure in the lower part 56 is equal again to the predetermined pressure. At the same time, the entire device 1 will move further upwards under the influence of the rising pressure in the lower part 56. In a newly achieved equilibrium situation, therefore, the entire device 1 has moved further upwards, with the pressure in the upper part 55 being equal to the pressure in the lower part 56 and the pressure in the lower part 56 being equal to the predetermined pressure, so that eventually in the entire inner space of the container the pressure is equal to the predetermined pressure.

A major advantage of this embodiment is that the volume of the upper part 55 decreases according as more fluid is drawn from the container. The residual fluid is therefore concentrated in a smaller volume. What is thus accomplished is that an optimum amount of fluid can be dispensed and eventually only a small amount of fluid is left behind in the container when it is nearly empty.

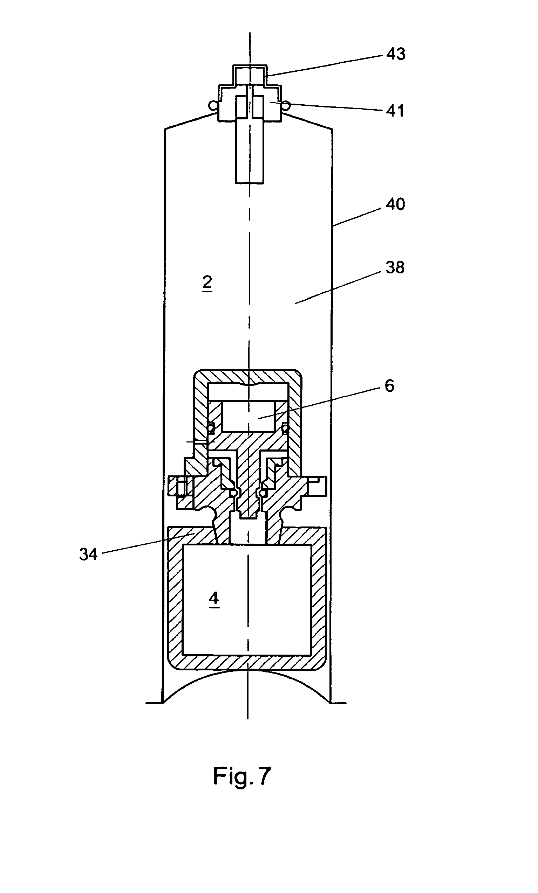

Fig. 7 shows another possible use of the device according to Fig. 1 in a container 38 designed as an aerosol can. Parts corresponding to Fig. 1 are provided with the same reference numerals.

In the device according to Fig. 7, the first chamber 4 is of cylindrical design. The same applies to the container 38. An outer diameter of the first chamber 4 corresponds at least substantially to an inner diameter of the container 38. In this example, the first chamber is placed near, in this case even on, a bottom of the container. The second chamber 6 is disposed above the first chamber 4. Accordingly, the second chamber 6 is disposed in the inner space 2 of the container, in use filled with the product to be dispensed. Further, this inner space 2 is situated above the first chamber 4. In this example, the first chamber 4 is a tight fit in the container 38 and so remains in place even when the container is turned upside down.

An advantage of the device according to Fig. 8 is that in contrast to the device according to Fig. 5, no sealing 52 needs to be present, since the first chamber 4 is inherently fully gas-tight.

## Claims

1. A pressure control device (1) for maintaining a constant predetermined excess pressure in an inner space of a fluid dispensing container, which device comprises a first chamber (4), a fluid connection between the first chamber (4) and the container, a valve with a closing member (8) for releasing and closing said fluid connection and a resilient pressure element exerting said predetermined excess pressure onto the closing member in closing direction, the closing member comprising a plunger (8) having a stem (24) axially extending from one axial end of the plunger, wherein the stem (24) being configured to form the valve, the resilient pressure element comprising a second chamber (6) being filled with a gas at the predetermined excess pressure and relative to which the closing member (8) is movable, the first chamber (4) being filled with a gas at a pressure higher than said predetermined excess pressure, while in use the fluid connection is released if the fluid pressure in the container drops below the predetermined excess pressure, so that gas flows from the first chamber (4) to the container and the pressure in the container increases until the fluid connection is closed again by the closing member (8) as a result of the increased pressure in the container, **characterized in that** the first chamber (4) comprises a vessel (14) having a wall (32) separating the inner space from the first chamber, wherein the wall (32) having a first opening (16), and the second chamber (6) comprises a cylinder (10) having a closed first axial end (12) and an open second axial end (19), the second axial end being adapted for fluid communication with the first chamber by means of a second opening (18) different from the first opening (16), and that a connecting member (15) is associated with the second axial end of the cylinder (10) and connecting the cylinder (10) to the wall (32) of the vessel (14) through the first opening (16), wherein a sealing ring (20) is fixed to the connecting member in a recess (17) between the connecting member (15) and a locking ring (21), that a free end of the stem (24) defines a first subsurface (34) and an axial end of the plunger (8) opposite the stem defines a second subsurface (36), that the plunger (8) is guided in axial direction at the inner wall of the cylinder (10) and defines the second chamber (6) on the opposite axial end of the plunger (8) and the first axial end (12) of the cylinder, that the stem (24) is provided with a circumferential recess (22) and the first opening (16) is provided with the sealing ring (20), wherein an outer edge of the circumferential recess (22) defines with the sealing ring (20) a closing position of the valve, and that a sidewall of the cylinder (10) being provided with an opening (28) through which the fluid connection is adapted to extend to the inner space of the fluid dispensing container.

2. A device according to claim 1, wherein the closing member (8) is movable in a reciprocated manner between an upper extreme position and a lower extreme position, at which positions the fluid connection is closed, which extreme positions are defined by the width of the circumferential recess and the release position of the closing member (8) is defined between the upper and lower closing positions.

3. A device according to claim 2, **characterized in that** the upper and lower extreme positions are provided by outer edges of the circumferential recess.

4. A device according to claim 3, **characterized in that** at the upper and lower extreme positions, a gas seal is formed by contact between the sealing ring and the outer edges.

5. A device according to one of claims 1 to 4, **characterized in that** the plunger (8) is sealed by an outer ring (26) with respect to the inner wall of the cylinder (10).

6. A device according to one of claims 1 to 5, **characterized in that** the closing member is substantially outside the first chamber.

7. A device according to one of claims 1 to 6, **characterized in that** the volume of the first chamber is substantially greater than the volume of the second chamber.

8. A device according to one of claims 1 to 7, **characterized in that** the second opening (18) forms a gas seal with the closing member (8).

9. A cylindrical container (38) provided with a pressure control device (1) according to one of claims 1 to 8.

10. A cylindrical container according to claim 9, **characterized in that** the first chamber (4) being designed as a plunger (53) which is arranged to be received, in use, in the container (38) so as to be movable in axial direction of the container, the first chamber (4) dividing the container into an upper and a lower part, the fluid connection terminating in the lower part of the container, while the upper part of the container is filled with the fluid to be dispensed, and in use, when the pressure in the upper part of the container decreases below the predetermined pressure, the pressure in the lower part of the container will likewise decrease because the first chamber (4) designed as a plunger will move such that the volume of the upper part of the container will decrease whereas the volume of the lower part of the container will increase, whereby also the fluid connection between the first chamber and the lower part of the container is released, so that gas flows from the first chamber to the lower part of the container and the pressure in the lower part of the container as well as the pressure in the upper part of the container will rise again, while the chamber designed as a plunger moves further upwards until the fluid connection is closed again by the closing member as a result of the increased pressure in the lower part of the container.

11. A cylindrical container according to claim 10, **characterized in that** the second chamber (6) extends substantially in the lower part of the container (38).

12. A cylindrical container according to claim 9, **characterized in that** the first chamber (4) being of cylindrical design having an outside diameter corresponding to the inside diameter of the container (38), so that the first chamber can be positioned adjacent the bottom of the container, while the second chamber (6) is situated above the first chamber and in an inner space of the container located above the first chamber, which inner space, in use, is filled with the product to be dispensed.

## Patentansprüche

1. Druckregelvorrichtung (1) zum Aufrechterhalten eines konstanten, vorbestimmten Überdrucks in einem Innenraum eines Fluidausgabebehälters, wobei die Vorrichtung umfasst: eine erste Kammer (4), eine Fluidverbindung zwischen der ersten Kammer (4) und dem Behälter, ein Ventil mit einem Schließteil (8) zum Freigeben und Schließen der Fluidverbindung und ein federndes Druckelement, das den vorbestimmten Überdruck in Schließrichtung auf das Schließteil ausübt, wobei das Schließteil einen Stößel (8) mit einem Schaft (24) umfasst, der axial von einem axialen Ende des Stößels aus verläuft, wobei der Schaft (24) das Ventil bildend gestaltet ist und das federnde Druckelement eine zweite Kammer (6) umfasst, die mit einem Gas mit dem vorbestimmten Überdruck gefüllt ist und relativ zu der das Schließteil (8) bewegbar ist, wobei die erste Kammer (4) mit einem Gas gefüllt ist, dessen Druck höher als der vorbestimmte Überdruck ist, wobei die Fluidverbindung im Gebrauch freigegeben wird, wenn der Fluiddruck in dem Behälter unter den vorbestimmten Überdruck fällt, so dass Gas aus der ersten Kammer (4) in den Behälter strömt und der Druck in dem Behälter wieder steigt, bis die Fluidverbindung durch das Schließteil (8) infolge des gestiegenen Drucks im Behälter wieder geschlossen wird, **dadurch gekennzeichnet, dass** die erste Kammer (4) ein Gefäß (14) mit einer Wand (32) umfasst, welche den Innenraum von der ersten Kammer trennt, wobei die Wand (32) eine erste Öffnung (16) aufweist und die zweite Kammer (6) einen Zylinder (10) mit einem geschlossenen ersten axialen Ende (12) und einem offenen zweiten axialen Ende (19) umfasst, wobei das zweite axiale Ende zur Fluidverbindung mit der ersten Kammer durch eine von der ersten Öffnung (16) verschiedene, zweite Öffnung (18) ausgelegt ist, und ein Verbindungsteil (15) dem zweiten axialen Ende des Zylinders (10) zugeordnet ist und den Zylinder (10) durch die erste Öffnung (16) mit der Wand (32) des Gefäßes (14) verbindet, wobei ein Dichtring (20) an dem Verbindungsteil in einer Ausnehmung (17) zwischen dem Verbindungsteil (15) und einem Sicherungsring (21) befestigt ist, dass ein freies Ende des Schaftes (24) eine erste Unterfläche (34) festlegt und ein dem Schaft (24) gegenüber liegendes axiales Ende des Stößels (8) eine zweite Unterfläche (36) festlegt, dass der Stößel (8) in axialer Richtung an der Innenwand des Zylinders (10) geführt ist und die zweite Kammer (6) an dem gegenüberliegenden axialen Ende des Stößels (8) und dem ersten axialen Ende (12) des Zylinders bildet, dass der Schaft (24) mit einer Umfangsausnehmung (22) versehen ist und die erste Öffnung (16) mit dem Dichtring (20) versehen ist, wobei ein äußerer Rand der Umfangsausnehmung (22) mit dem Dichtring (20) eine Schließstellung des Ventils festlegt, und dass eine Seitenwand des Zylinders (10) mit einer Öffnung (28) versehen ist, durch welche die Fluidverbindung so angepasst ist, dass sie sich in den Innenraum des Fluidausgabebehälters erstreckt.

2. Vorrichtung nach Anspruch 1, wobei das Schließteil (8) zwischen einer oberen und einer unteren Endstellung hin und her bewegbar ist, an denen die Fluidverbindung geschlossen ist, wobei diese Endstellungen durch die Breite der Umfangsausnehmung festgelegt sind und die Freigabestellung des Schließteils (8) zwischen der oberen und der unteren Schließstellung festgelegt ist.

3. Vorrichtung nach Anspruch 2, **dadurch gekennzeichnet, dass** die obere und die untere Endstellung durch äußere Ränder der Umfangsausnehmung gebildet sind.

4. Vorrichtung nach Anspruch 3, **dadurch gekennzeichnet, dass** an der oberen und der unteren Endstellung eine Gasdichtung durch den Kontakt zwischen dem Dichtring und den äußeren Rändern gebildet ist.

5. Vorrichtung nach einem der Ansprüche 1 bis 4, **dadurch gekennzeichnet, dass** der Stößel (8) durch einen äußeren Ring (26) gegenüber der Innenwand des Zylinders (10) abgedichtet ist.

6. Vorrichtung nach einem der Ansprüche 1 bis 5, **dadurch gekennzeichnet, dass** sich das Schließteil im Wesentlichen außerhalb der ersten Kammer befindet.

7. Vorrichtung nach einem der Ansprüche 1 bis 6, **dadurch gekennzeichnet, dass** das Volumen der ersten Kammer deutlich größer als das Volumen der zweiten Kammer ist.

8. Vorrichtung nach einem der Ansprüche 1 bis 7, **dadurch gekennzeichnet, dass** die zweite Öffnung (18) mit dem Schließteil (8) eine Gasdichtung bildet.

9. Zylindrischer Behälter (38) mit einer Druckregelvorrichtung (1) nach einem der Ansprüche 1 bis 8.

10. Zylindrischer Behälter nach Anspruch 9, **dadurch gekennzeichnet, dass** die erste Kammer (4) als ein Stößel (53) ausgebildet ist, der im Gebrauch in dem Behälter (38) in axialer Richtung des Behälters bewegbar aufgenommen ist, wobei die erste Kammer (4) den Behälter in einen oberen und einen unteren Teil teilt, wobei die Fluidverbindung in den unteren Teil des Behälters mündet, während der obere Teil des Behälters mit dem auszugebenden Fluid gefüllt ist, und wobei im Gebrauch bei einem Sinken des Drucks im oberen Teil unter den vorbestimmten Druck der Druck im unteren Teil des Behälters ebenfalls sinkt, da die als Stößel ausgebildete erste Kammer (4) sich derart bewegt, dass das Volumen des oberen Teils des Behälters abnimmt, während das Volumen seines unteren Teils zunimmt, wodurch ebenfalls die Fluidverbindung zwischen dem Gefäß und dem unteren Teil des Behälters freigegeben wird, so dass Gas aus der ersten Kammer in den unteren Teil des Behälters strömt und der Druck im unteren Teil des Behälters sowie der Druck im oberen Teil des Behälters erneut ansteigt, während die als Stößel ausgebildete Kammer sich weiter nach oben bewegt, bis die Fluidverbindung durch das Schließteil infolge des erhöhten Drucks im unteren Teil des Behälters wieder geschlossen wird.

11. Zylindrischer Behälter nach Anspruch 10, **dadurch gekennzeichnet, dass** die zweite Kammer (6) im wesentlichen im unteren Teil des Behälters (38) verläuft.

12. Zylindrischer Behälter nach Anspruch 9, **dadurch gekennzeichnet, dass** die erste Kammer (4) eine Zylinderform mit einem Außendurchmesser aufweist, der dem Innendurchmesser des Behälters (38) entspricht, so dass die erste Kammer benachbart dem Boden des Behälters positioniert werden kann, während die zweite Kammer (6) oberhalb der ersten Kammer und in einem Innenraum des Behälters angeordnet ist, der sich oberhalb der ersten Kammer befindet, wobei der Innenraum im Gebrauch mit dem auszugebenden Produkt gefüllt ist.

## Revendications

1. Dispositif régulateur de pression (1) destiné à maintenir une surpression constante prédéterminée dans une espace intérieur d'un récipient distributeur de fluide, lequel dispositif comprend une première chambre (4), une communication de fluide entre la première chambre (4) et le récipient, une soupape avec un élément de fermeture (8) pour libérer et fermer ladite communication de fluide et un élément de pression élastique exerçant ladite surpression prédéterminée sur l'élément de fermeture dans le sens de la fermeture, l'élément de fermeture comprenant un piston (8) muni d'une tige (24) qui s'étend dans le sens axial à partir d'une extrémité axiale du piston, la tige (24) étant configurée pour former la soupape, l'élément de pression élastique comprenant une deuxième chambre (6) qui est remplie d'un gaz sous la surpression et par rapport à laquelle l'élément de fermeture (8) est mobile, la première chambre (4) étant remplie d'un gaz sous une pression supérieure à ladite surpression prédéterminée, tandis qu'en utilisation, la communication de fluide est libérée si la pression de fluide dans le récipient baisse en dessous de la surpression prédéterminée, de sorte que du gaz s'écoule de la première chambre (4) vers le récipient et que la pression dans le récipient augmente jusqu'à ce que la communication de fluide soit refermée par l'élément de fermeture (8) sous l'effet de la pression augmentée dans le récipient, **caractérisé en ce que** la première chambre (4) comprend une cuve (14) possédant une paroi (32) qui sépare l'espace intérieur de la première chambre, laquelle paroi (32) possède une première ouverture (16), et la deuxième chambre (6) comprend un cylindre (10) ayant une première extrémité axiale (12) fermée et une deuxième extrémité axiale (19) ouverte, la deuxième extrémité axiale étant adaptée pour la communication de fluide avec la première chambre au moyen d'une deuxième ouverture (18) différente de la première ouverture (16), et **en ce qu'**un élément de liaison (15) est associé à la deuxième extrémité axiale du cylindre (10) et relie le cylindre (10) à la paroi (32) de la cuve (14) à travers la première ouverture (16), une bague d'étanchéité (20) étant fixée à l'élément de liaison dans un renfoncement (17) entre l'élément de liaison (15) et une bague de verrouillage (21), **en ce qu'**une extrémité libre de la tige (24) définit une première sous-surface (34) et une extrémité axiale du piston (8) opposée à la tige définit une deuxième sous-surface (36), **en ce que** le piston (8) est guidé dans le sens axial sur la paroi intérieure du cylindre (10) et définit la deuxième chambre (6) à l'extrémité axiale opposée du piston (8) et à la première extrémité axiale (12) du cylindre, **en ce que** la tige (24) est munie d'un renfoncement périphérique (22) et la première ouverture (16) est munie de la bague d'étanchéité (20), un bord extérieur du renfoncement périphérique (22) définissant avec la bague d'étanchéité (20) une position de fermeture de la soupape, et **en ce qu'**une paroi latérale du cylindre (10) est munie d'une ouverture (28) à travers laquelle la communication de fluide peut s'étendre vers l'espace intérieur du récipient distributeur de fluide.

2. Dispositif selon la revendication 1, dans lequel l'élément de fermeture (8) est mobile de façon alternative entre une position extrême haute et une position extrême basse, positions dans lesquelles la communication de fluide est fermée, ces positions extrêmes étant définies par la largeur du renfoncement périphérique et la position de libération de l'élément de fermeture (8) étant définie entre les positions de fermeture haute et basse.

3. Dispositif selon la revendication 2, **caractérisé en ce que** les positions extrêmes haute et basse sont définies par les bords extérieurs du renfoncement périphérique.

4. Dispositif selon la revendication 3, **caractérisé en ce que** dans les positions extrêmes haute et basse, une étanchéité aux gaz est formée par le contact entre la bague d'étanchéité et les bords extérieurs.

5. Dispositif selon l'une des revendications 1 à 4, **caractérisé en ce que** le piston (8) est rendu étanche par une bague extérieure (26) vis-à-vis de la paroi intérieure du cylindre (10).

6. Dispositif selon l'une des revendications 1 à 5, **caractérisé en ce que** l'élément de fermeture se trouve sensiblement à l'extérieur de la première chambre.

7. Dispositif selon l'une des revendications 1 à 6, **caractérisé en ce que** le volume de la première chambre est sensiblement supérieur au volume de la deuxième chambre.

8. Dispositif selon l'une des revendications 1 à 7, **caractérisé en ce que** la deuxième ouverture (18) forme une étanchéité aux gaz avec l'élément de fermeture (8).

9. Récipient cylindrique (38) muni d'un dispositif de régulation de la pression (1) selon l'une des revendications 1 à 8.

10. Récipient cylindrique selon la revendication 9, **caractérisé en ce que** la première chambre (4) est conçue comme un piston (53) qui est disposé pour se loger, pendant l'utilisation, dans le récipient (38), de façon à pouvoir se déplacer dans le sens axial du récipient, la première chambre (4) divisant le récipient en une partie supérieure et une partie inférieure, la communication de fluide se terminant dans la partie inférieure du récipient tandis que la partie supérieure du récipient est remplie du fluide à distribuer et, en utilisation, quand la pression dans la partie supérieure du récipient diminue en dessous de la pression prédéterminée, la pression dans la partie inférieure du récipient diminue elle aussi parce que la première chambre (4) conçue comme un piston se déplace de telle façon que le volume de la partie supérieure du récipient diminue tandis que le volume de la partie inférieure du récipient augmente, de sorte que la communication de fluide entre la première chambre et la partie inférieure du récipient est également libérée, de telle manière que du gaz s'écoule de la première chambre à la partie inférieure du récipient et que la pression dans la partie inférieure du récipient ainsi que la pression dans la partie supérieure du récipient augmentent à nouveau, tandis que la chambre conçue comme un piston se déplace encore vers le haut jusqu'à ce que la communication de fluide soit refermée par l'élément de fermeture sous l'effet de la pression augmentée dans la partie inférieure du récipient.

11. Récipient cylindrique selon la revendication 10, **caractérisé en ce que** la deuxième chambre (6) s'étend sensiblement dans la partie inférieure du récipient (38).

12. Récipient cylindrique selon la revendication 9, **caractérisé en ce que** la première chambre (4) est de forme cylindrique avec un diamètre extérieur correspondant au diamètre intérieur du récipient (38), de sorte que la première chambre peut être placée à proximité du fond du récipient tandis que la deuxième chambre (6) est située au-dessus de la première chambre et dans un espace intérieur du récipient situé au-dessus de la première chambre, lequel espace intérieur, en utilisation, est rempli du produit à distribuer.
